# EUROPÄISCHE PATENTANMELDUNG

(11) **EP 3 121 149 A1**
(43) Veröffentlichungstag der Anmeldung: **25.01.2017**
(21) Anmeldenummer: 15177608.5
(22) Anmeldetag: 21.07.2015
(51) Int. Cl.: C01B 33/107, B01J 19/24, B01J 19/02

(54) **INTENSIVIERUNG DES WÄRMETAUSCHES DURCH GEEIGNETE FORMGEBUNG IM UMKEHRROHR AUS XSIC-WERKSTOFFSYSTEM**

(71) Anmelder: Evonik Degussa GmbH, 45128 Essen (DE)
(72) Erfinder: Zipper, Christof, 79618 Rheinfelden (DE); Latoschinski, Günter, 45770 Marl (DE); Stochniol, Guido, 45721 Haltern am See (DE); Wehner, Bernd, 63791 Karlstein (DE); Döring, Jens, 44141 Dortmund (DE); Sauer, Jörg, 76135 Karlsruhe (DE)

(57) **Zusammenfassung**

Gegenstand der Erfindung ist die Verwendung eines Umkehrrohres aus xSiC mit einer Intensivierung des Wärmetausches zur Erhöhung der Wärmeintegration bei der Umsetzung von Chlorsilanen.

## Beschreibung

Die Erfindung betrifft die Verwendung eines Umkehrrohres aus xSiC mit der Wirkung einer Intensivierung des Wärmeaustausches zur Erhöhung der Wärmeintegration bei der Umsetzung von Chlorsilanen. Im Rahmen der Erfindung sind die Begriffe Wärmetausch und Wärmeaustausch gleichbedeutend.

Bei Umsetzungsreaktionen mit Chlorsilanen, zum Beispiel für die Hydrierung von Tetrachlorsilan oder Siliziumtetrachlorid mittels wasserstoffhaltigen Gasen zu Trichlorsilan, ist im Allgemeinen ein Wärmeaustausch zwischen Eduktstrom und Produktstrom notwendig oder zumindest vorteilhaft.

Reaktionskammern aus keramischem Material, beispielsweise in Form keramischer Rohre, sind seit Jahren bekannt. In der Patentanmeldung DE 102010039267 A1 ist ein Reaktor mit einer Reaktionskammer beschrieben, die aus keramischen Material ausgeführt ist. Die Reaktionskammer ist mit einem Wärmeaustauscher versehen, durch den das Strömungsrohr und das einseitig geschlossene Rohr geführt werden. Mittels dieses Wärmetauschers wird die Wärme außen am Reaktionsrohr abgeführt und von außen in das Eduktrohr eingegeben.

Die vorliegende Erfindung löst die Aufgabe, die Effizienz der Prozessführung weiter zu steigern.

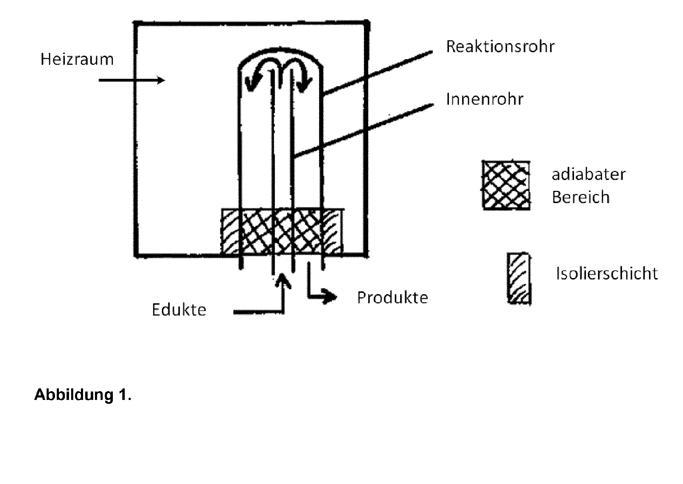

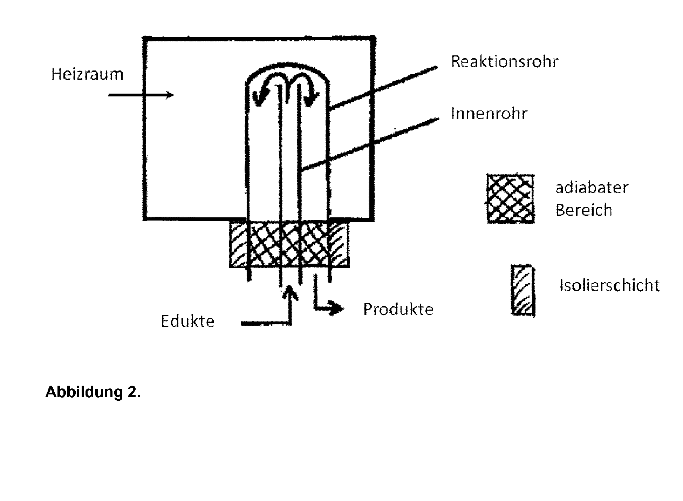

Im Rahmen der Erfindung ist mit "*Umkehrrohr*" eine aus Rohren zusammengesetzte Reaktorbauart für chemische Reaktionen bezeichnet, die zumindest ein äußeres, drucktragendes Rohr aufweist, das an einem Rohrende verschlossen ist. Dieses Rohr ist am anderen Ende offen und wird im Rahmen der Erfindung mit *"Reaktionsrohr"* bezeichnet (**Abbildungen 1** und **2**).

Wird durch das offene Ende ein weiteres Rohr bis kurz vor das verschlossene Ende des Reaktionsrohres eingesteckt, das im Rahmen der Erfindung mit *"Innenrohr"* bezeichnet wird, können Edukte durch dieses Innenrohr bis in den Bereich des verschlossenen Rohrendes des Reaktionsrohres geführt werden. Dort treten die Edukte aus dem eingesteckten Rohr aus, werden um 180° umgelenkt, gleichbedeutend mit der Umkehrung der Strömungsrichtung.

Zwischen den zylinderförmigen Flächen an der Außenseite des Innenrohres und der Innenseite des Reaktionsrohres befindet sich ein ringförmiges Volumen. In diesem Volumen setzen sich die Edukte zum Produkt um.

Gegenstand der Erfindung ist also die Verwendung eines Rohres bei der Umsetzung von Chlorsilanen, das an einem Rohrende verschlossen und am anderen Ende offen ist, genannt Reaktionsrohr, wobei durch das offene Ende zumindest ein weiteres Rohr, genannt Innenrohr, bis vor das verschlossene Ende des Reaktionsrohres eingesteckt ist, welche dadurch gekennzeichnet ist, dass das Material zumindest eines Innenrohres und des Reaktionsrohres xSiC ist, und der Wärmeaustausch zumindest über einen Teil der Innenseite des Reaktionsrohres mit der Außenseite des Innenrohres erfolgt, wobei zumindest ein Teil der Außenseite des Reaktionsrohres mit einer Isolierschicht versehen ist.

Die erfindungsgemäße Verwendung hat den Vorteil, dass der Wärmeaustausch *im Reaktionsrohr* zwischen dessen Inneren und dem Inneren des Innenrohres stattfindet. Im Gegensatz zum Stand der Technik wird Wärme nicht nur von außen über die Medien ab- oder herangeführt, sondern ihr Transfer ist in dem Umkehrrohr integriert. Die erfindungsgemäße Verwendung zielt auf eine Intensivierung des Wärmeaustausches, und zwar im Ein- bzw. Austrittsbereich des Umkehrrohres.

Bei der Verwendung wird außerdem beobachtet, dass der Wärmeaustausch zwischen Edukt- und Produktstrom umso intensiver ist, je höher die Geschwindigkeit beim Durchströmen des ringförmigen Volumens ist und/oder je mehr Turbulenz in den strömenden Medien währenddessen auftritt. Eine solche Vergrößerung von Geschwindigkeit bzw. Turbulenz lässt sich durch die Formgebung der umströmten Flächen beeinflussen.

In der erfindungsgemäßen Verwendung wird ein Wieder-Aufheizen des abkühlenden Mediums im ringförmigen Volumen *von außerhalb des Reaktionsrohres* vermieden, indem zumindest ein Teil der axialen Länge des Reaktionsrohres an seiner Außenseite mit einer Isolierung versehen ist. Das ist gleichbedeutend damit, dass die Isolierung das Äußere des Reaktionsrohres zumindest abschnittsweise umgibt.

Als Material zumindest für das Reaktionsrohr und zumindest für ein Innenrohr werden Al₂O₃, AIN, Si₃N₄, SiCN, SiC, Si-infiltriertes SiC, isostatisch gepresstes SiC, heiß isostatisch gepresstes oder drucklos gesintertes SiC eingesetzt. Die dem Fachmann geläufigen unterschiedlichen Typen von keramischen Werkstoffen, die ganz oder teilweise aus Siliziumcarbid bestehen, sind im Rahmen der Erfindung mit "*xSiC*" abgekürzt. Hierunter fallen beispielsweise stickstoffinfiltrierte oder drucklos gesinterte Siliciumcarbide.

Der Einsatz des Werkstoffsystems xSiC in der erfindungsgemäßen Verwendung erlaubt den Wärmeaustausch in einem erhöhten Temperaturbereich bis zu 1200 °C, der thermodynamisch günstiger und bei Umsetzungsreaktionen mit Chlorsilanen bedeutsam ist, und überdies in aggressiven Medien, gegen die üblicherweise verwendete Materialien nicht beständig sind. Dagegen wird der Stand der Technik gemäße Wärmeaustausch erst nach Übergang der Medien, ganz oder teilweise, auf ein rein metallisches oder ein Graphit-Werkstoffsystem vorgenommen.

Die Erfindung wird im Folgenden näher erläutert.

Vorzugsweise kann durch den nicht isolierten Teil am Umkehrrohr Wärme eingetragen werden. Die eingetragene Wärme kann beispielsweise in einem Heizraum in einer dem Fachmann bekannten Weise erzeugt werden. In diesem Heizraum befindet sich das Umkehrrohr ganz oder teilweise (**Abbildungen 1** und **2**).

Besonders bevorzugt umgibt die Isolierschicht das Reaktionsrohr an seiner Außenseite in Form eines geschlossenen Ringes, wobei die Isolierschicht der Außenwand des Reaktionsrohres folgt und an dieser anliegt. Es kann vorteilhaft sein, wenn sich die Isolierschicht über einen Teil längs der Längsachse des Reaktionsrohres erstreckt, gleichbedeutend damit, dass nur ein Teil des Umkehrrohres von der Isolierschicht umgeben ist, während über den verbleibenden Teil Wärmeaustausch mit dem Heizraum stattfindet. Vorzugsweise schließt die Isolierschicht mit der äußeren Oberfläche des Heizraums ab oder schließt sich dieser an.

In dem Volumen zwischen Innenrohr und Reaktionsrohr findet zumindest ein Teil des Wärmeaustausches statt, und die Isolierschicht bewirkt, dass sich das im Raum zwischen Reaktionsrohr und Innenrohr abgekühlte Produktgemisch nicht wieder erwärmt. Der mit der Isolierschicht umgebene Raum wird im Rahmen der Erfindung mit "adiabater Bereich" bezeichnet, schematisch dargestellt durch den kreuzweise schraffierten Bereich in **Abb. 1****.** Der einfach schraffierte Bereich stellt die Isolierschicht dar.

Der Vorteil besteht darin, dass eine Wieder-Erwärmung von Produktmedium im adiabaten Bereich unterdrückt ist. Der adiabate Bereich verleiht der erfindungsgemäßen Verwendung demnach den Vorteil, dass die Zusammensetzung des Produktstromes aufrechterhalten wird, weil Rückreaktionen wegen zu geringer Temperatur nicht mehr stattfinden können.

Der adiabate Bereich kann innerhalb oder außerhalb des Heizraumes platziert sein. Die Anordnung außerhalb des Heizraumes zeigt schematisch **Abb. 2****.**

Bei der erfindungsgemäßen Verwendung können die überströmten Flächen eine Formgebung aufweisen, die einen Wärmetausch begünstigt. Vorzugsweise besteht die Formgebung darin, dass die Oberfläche auf der Außenseite des Innenrohres und/oder der Innenseite des gegenüber liegenden Reaktionsrohres aufgeraut ist. Eine solche Verwendung hat den Vorteil, dass die nach Austritt aus dem Innenrohr die über die Innenseite des Reaktionsrohres und die Außenseite des Innenrohres strömenden Medien stärker in Turbulenz geraten. Diese erhöhte Turbulenz wiederum intensiviert den Wärmeaustausch. Noch weiter erhöht werden die Turbulenzen durch eine Formgebung, die ausgewählt sein kann aus Rillen, Noppen, Mäanderstrukturen, oder stochastisch verteilten Unebenheiten. Alle haben sie die Eigenschaft, die Turbulenz zu erhöhen. Die Details einer solchen Formgebung sind dem auf dem Gebiet der Strömungslehre bewanderten Fachmann bekannt.
Natürlich können auch Querschnittsverengungen durch die - aus Kontinuitätsgründen folgende - Geschwindigkeitserhöhung des Mediums den Wärmeaustausch verbessern.

Bei der erfindungsgemäßen Verwendung können Chlorsilane bei einem Überdruck von 0,2 bis 50 bar und Temperaturen von 20 °C bis 1200 °C umgesetzt werden, vorzugsweise bei der Hydrierung von Siliziumtetrachlorid zu Trichlorsilan.

Eine weitere vorteilhafte Verwendung besteht darin, in ein Innenrohr noch ein weiteres Rohr oder mehrere Rohre einzubringen, die ebenfalls aus xSiC bestehen, oder, sofern die beteiligten Medien es zulassen, auch aus metallischem Werkstoff gefertigt sein können.

Der integrierte Wärmetausch findet dann in alle oder zumindest in eines der Innenrohre statt.

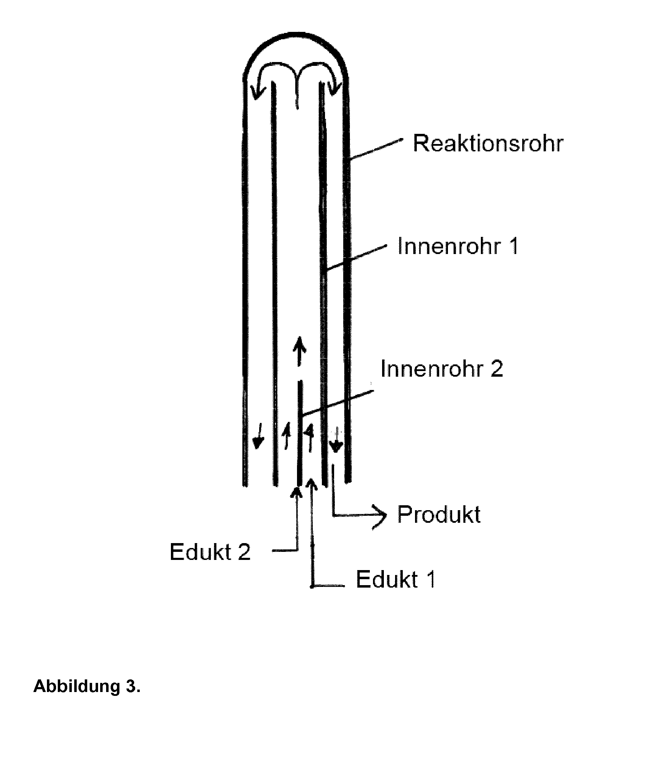

Eine besonders bevorzugte Verwendung mehrerer Innenrohre zeigt schematisch die **Abb. 3****.** In ein Innenrohr 1, das vorzugsweise aus xSiC ausgeführt ist und durch das das

Edukt 1 eingeströmt wird, ist ein Innenrohr 2 gesteckt, das aus Metall ausgeführt sein kann. Des Weiteren kann das Innenrohr mit geringem Durchmesser ausgeführt werden, so dass es in der Abb. 3 nur als eine Linie gezeigt ist. Durch das Innenrohr 2 kann Edukt 2 eingeströmt werden, beispielsweise eine Flüssigkeit. In der Abbildung sind der adiabate Bereich, die Isolierschicht und der Heizraum nicht dargestellt.

Falls nun zwischen strömendem Edukt 1, Edukt 2, und/oder Produkt zumindest ein Temperaturgefälle besteht, kann zwischen den Strömen ein Wärmeaustausch stattfinden. Ist zum Beispiel das strömende Edukt 1 kälter als das strömende Produkt und ist das eingeströmte Edukt 2 flüssig, kann Wärme aus dem Produkt Strom abtransportiert und für eine Verdampfung des flüssigen Eduktes 2 verwendet werden. Damit bewirkt diese Ausführungsform der erfindungsgemäßen Verwendung eine Verdampfung durch die Abwärme des Produktgasstromes. Also hat man den Energieeinsatz gespart, der in der konventionellen Vorgehensweise von außen für die Verdampfung aufgewandt werden müsste. Eine solche Verwendung ermöglicht demnach erhebliche Kosteneinsparungen.

## Patentansprüche

1. Verwendung eines Rohres bei der Umsetzung von Chlorsilanen,
das an einem Rohrende verschlossen und am anderen Ende offen ist, genannt Reaktionsrohr,
wobei durch das offene Ende zumindest ein weiteres Rohr, genannt Innenrohr, bis vor das verschlossene Ende des Reaktionsrohres eingesteckt ist,
**dadurch gekennzeichnet,**
**dass** das Material zumindest eines Innenrohres und des Reaktionsrohres xSiC ist, und der Wärmeaustausch zumindest über einen Teil
des Reaktionsrohres mit der Außenseite des Innenrohres erfolgt, wobei zumindest ein Teil der Außenseite des Reaktionsrohres mit einer Isolierschicht versehen ist.

2. Verwendung nach Anspruch 1, wobei der mit einer Isolierschicht versehene Teil auf der Außenseite des Reaktionsrohres im Inneren oder außerhalb eines Heizraumes ist.

3. Verwendung nach einem der vorhergehenden Ansprüche und für die Umsetzung von Chlorsilanen bei einem Überdruck von 0,2 bis 50 bar und Temperaturen von 20 °C bis 1200 °C,
vorzugsweise zur Hydrierung von Siliziumtetrachlorid zu Trichlorsilan.
